# EUROPEAN PATENT APPLICATION

(11) **EP 2 680 194 A1**
(43) Date of publication of application: **01.01.2014**
(21) Application number: 12382254.6
(22) Date of filing: 27.06.2012
(51) Int. Cl.: G06Q 10/00, G06Q 30/00

(54) **Proactive method and system of searching and/or inferring and/or sending information**

(71) Applicant: Uribe-Etxebarria Jimenez, Xabier, 48990 Algorta, Getxo, Bizkaia (ES)
(72) Inventor: Uribe-Etxebarria Jimenez, Xabier, 48990 Algorta, Getxo, Bizkaia (ES)
(74) Representative: ABG Patentes, S.L.

(57) **Abstract**

The present invention relates to a method and system of searching and/or inferring and/or sending information to an application which includes sending information to said application. This information is related to the events of a user or of his contacts or of a provider, and contains information of products and/or services related to said events. The system contains data tables of the user, his contacts, the product and/or service providers and their products and/or services.

## Description

### Object of the Invention

The present invention relates to a method which comprises supplying information to a user regarding products and/or services related to the events of the user himself and/or of his contacts and/or to the events of a product and/or service provider. These events can be recorded in the social network calendar of the user or of his contacts.

### Background of the Invention

When a user uses the Internet, all the data which he inputs can be stored and used by different applications. All the companies offering products and/or services want to reach their consumer in the clearest and most direct way particularly as individualised and as personalised as possible, for which many alternatives have been carried out.

Social network applications, such as Facebook™ Beacon, which send information of external companies to the users of said social network and to the contacts of said users in said social network are known.

On the other hand, Facebook™ Connect allows the data stored by the users in said social networks to be viewed by other companies.

Applications informing the user on the existence of products related to searches performed or to e-mail content are also known.

US2002004753A describes a system for finding and supplying information to a consumer regarding specific products. The system comprises servers storing product-related information and the URLs containing said products on the Internet, also considering additional information contained in the web pages of said URLs: promotions, discounts, offers, reviews, guarantees, etc. These products are identified by a universal product number, for example, a UPC, or a Universal Product Code. The manufacturers are provided with tools which allow creating and maintaining UPC/URL or Universal Product Code/Uniform Resource Locator databases on the Internet, exclusively containing information of their products.

US2002055351A describes a system integrating the information of a series of contacts to facilitate searching for it in a server. Among its multiple features, the system can also use the information contained in the preferences of said contacts to send them advertisement on specific products of their interest.

However, all these applications and technologies send the user information related to his own preferences, but they do not integrate the information of the preferences and behaviour of the contacts together with a link (access) in which he finds products according to their preferences, nor do they integrate information of the events and/or publications in the social networks or the like of the user himself or of his contacts, nor act proactively based on all this information thus allowing the provider of a product and/or service to be able to reach a user needing the product and/or service at a precise and specific time in a proactive manner without the user initiating the process.

### Description of the Invention

The present invention solves the technical problem described above by means of a method of searching and/or inferring and/or sending information according to claim 1, and a system suitable for searching and/or inferring and/or sending information according to claim 7. Preferred embodiments of the invention are defined in the dependent claims.

A first inventive aspect shows a proactive method of searching, and/or inferring and/or sending information to an application by searching and/or inferring means, **characterised in that** it comprises at least the steps where:
a.- the searching and/or inferring means periodically enquire the temporal proximity of at least one event under a temporal proximity criterion already predetermined or defined by a user and according to a periodicity already predetermined or defined by the user himself or the searching and/or inferring means receive a notice of the temporal proximity of said at least one event according to a temporal proximity criterion already predetermined or defined by the user in at least one of the following data tables:
   ■ event table of the user,
   ■ event table of at least one user's contact,
   ■ event table of providers associated with a provider table
   when the searching and/or inferring means receive a result from the enquiry or the notice of the temporal proximity of the at least one event:
b.- the searching and/or inferring means relate said event with at least one product and/or service of a service and/or product data table, and
c.- the searching and/or inferring means send a notice of said event and a message related to the at least one product and/or service to the application.

The data tables are comprised in an information system, for example, they can be data tables comprised in databases, or can be data tables comprised in independent information systems or can be data tables comprised in a single information system.

Event table of the user is a table associated with a data table of the user. Data table of the user is a table comprising data relating to the user, such as his preferences, his personal data, etc. It also comprises user tastes relating to his permanent preferences: a specific literary genre, flower varieties, type of technology, transport preferences, such as using or not using toll motorways, etc.

Event table of at least one user's contact is a data table associated with a data table of one user's contact. A user's contact is an input in the contact table of the user.

Event table of providers associated with a provider table is a data table associated with a provider data table. A provider is a physical or virtual entity offering products and/or services.

The enquiry of the temporal proximity of an event comprises the set of actions intended for identifying the existence of an event related to any of the cases indicated (related to the user, to one of his contacts or to one of the providers), according to a temporal proximity criterion defined previously by the user of the application, such as for example "next week".

The periodicity with which the enquiry is carried out is defined by the user when he starts the application or at any time of use. It is also possible that, if the user does not define it, it can be defined by the application with default values; for example, daily, twice a day, etc. Likewise, it is also possible that the method is activated without the need of performing any enquiry, but when it receives a notice of the proximity of an event, such as for example, the launch of a product and/or service.

Inference is an evaluation between expressions or words, which when related allow plotting a logical line of logical condition or implication between the different expressions or words. The essential way of inferring is deductive reasoning. This inference particularly corresponds to a deduction and/or relation according to the preferences of the user and/or preferences of other users and/or programmed or un-programmed events of the user or of the user's contacts and/or of products and/or services and/or to the providers of these products and/or services or to any event related thereto. This relation is carried out by means known in the state of the art, for example by means of tables relating words, semantic concepts, meanings or ontologies with all those having to do with it; for example: products such as nappies, cots, strollers, foods, other accessories, etc., are associated with the word "baby".

An event of the user is an input in an event table of the user indicating a date and/or a time and/or a temporary sign with a theme type attribute. A theme type attribute is for example, a product and/or service, a birthday, an appointment, a meeting, the launch of a product and/or service, change in the conditions of the products and/or services, offers, promotions, obligation, scheduled or unscheduled appointment, anything which can be jotted down in a calendar usually with a time and a place or action to be performed, any programmed or non-programmed event, etc. The event of a user's contact is also defined.

The concept of event comprises a publication, understood as the public information of the user or of a user's contact or the public information of a provider, i.e., a third party user or application with access to a communications network in which the verification is being performed has access to this information.

Event of a provider is an input in a provider data table indicating an event related to said provider: the launch of one of its products and/or services, a change in the conditions of the products and/or services, offers, promotions, etc.

A product is an article, or a service or any other entity which can be the object of a commercial or non-commercial transaction.

Once the event has been identified, it is related to a product and/or service having semantic relation and/or associative relation with the event and/or inference relation with the event. This relation is carried out by means known in the state of the art, for example by means of tables relating words and/or, semantic concepts, meanings and/or ontologies with all those having to do with it, for example, products such as nappies, cots, strollers, foods, other accessories, etc., are associated with the word "baby".

At the time of relating an event with a product and/or service, information contained in a data table associated with the user or in the data tables of his contacts which can contain high level information, such as social information, is also used. This data table has the data which the user has input according to how he has interacted with the system. Thus for example the name of the user is provided, preferably with some of this data: name and surnames, objective data such as address, telephone, date of birth, and in particular embodiments, also occupation, education, religion, ethnicity, nationality, political affiliation, with other high level information such as the password of different services such as supermarket, online shop, purchase history, enquiry data history, subscriptions to any product and/or service, or even health data, weight, height, blood group, or personal or social information, such as family relationship, sentimental relationship, such as "boy/girlfriend", "husband/wife" and identifying data of said persons, tastes or preferences, orientation and sex life, abilities, self-esteem, attitude towards life, intelligence quotient, qualities, etc. In one embodiment, this data table is filled in when creating an input to the user and it is progressively filled in as its information is being used. The users in different embodiments are persons or machines.

The application receiving the notices is preferably used by a user, although not in a limiting manner. The application can be used by machine such as a smartphone, robot, computer or the like. There are several possibilities in terms of the way of receiving notices of the existence of events. In particular embodiments of the invention, these notices are sent as text messages, or messages encoded with Bidi codes, also known as quick response codes, or QR codes, or they can be an audio message, a message in augmented reality, etc. The application to which the invention refers to is the interface for receiving the messages and notices. In one embodiment, the user application is an application for mobile devices or the like, it can be created for the World Wide Web and/or the Internet, kiosks, for a smartphone, robot, a television set or any home automation display or any computing type device or device interpretable by computing, and under any platform. The application can also be incorporated in the computer on-board a vehicle. In one embodiment, this application is an integrated message reception and recognition application and in another embodiment, it is formed by a system receiving the information and another independent system processing it, for example for changing text to speech. Therefore, in different embodiments, this application receives the notice of an event or message related to a product and/or service which can be a first action triggering a second action; or it can be a written notice, for example a sentence or part of a written sentence or voice message, since the device in that embodiment has a text to speech engine. Furthermore, in another embodiment, the notice is received by means of NFC, Near Field Communication, a wireless technology between close objects, valid for example for identifying, exchanging or collecting data, similar to RFID, Radio Frequency Identification, cards. In different embodiments, the device has a barcode or bidirectional code or Bidi code receiver, and reading that code is sufficient for knowing the notice received. In one embodiment, the system comprises a facial recognition system. In one embodiment, the system comprises a language interpretation module for detecting a series of languages, and sending the messages and notices in said language. In one embodiment, the message related to the at least one product and/or service comprises an option for purchasing or acquiring and/or receiving information about the product and/or service through the user application, for example through a web service, an API or the like. In one embodiment, the message related to the at least one product and/or service comprises an option for purchasing or acquiring and/or receiving information about the product and/or service through NFC, a QR code or the like.

The advantage which the method according to the invention has with respect to the methods in the state of the art is that it enables the user to receive information of his own events and/or of his contacts and/or of provider events. For example, if a contact of a user has an event, for example a birthday, and the preferences of the contact are accesible, the user receives a notice for acquiring a suitable product and/or service for the contact at the time of the contact's birthday. Furthermore, this information is received in the user application without there having to be a prior action by the user, i.e., it behaves proactively.

Another advantage provided by the method according to the invention is that it can be implemented in a computer belonging to a shop which carries out its commercial activity depending on the preferences of the user, his contacts and the events of the user and the events of his contacts.

In a second inventive aspect, the invention has a proactive system for searching and/or inferring and/or sending information to an application, the system comprising:
- a data table of the user comprising data about a user, preferably user preferences,
- a contact table of the user,
- a service and/or product data table comprising data about products and/or services,
- searching and/or inferring means,
- a user application,
- a communications network interconnecting the searching and/or inferring means with the different data tables and with the user application,
and it comprises at least one of the following:
- an event table of the user such as for example the birthday of the user,
- at least one event table of at least one user's contact, such as for example the birthday of a user's contact,
- a provider table comprising data about the providers,
wherein the searching and/or inferring means are in communication with the different data tables and with the user application,
wherein the system is suitable for carrying out the steps of a method according to the first inventive aspect.

The data tables are comprised in an information system, for example, they can be data tables comprised in databases, or they can be data tables comprised in independent information systems or they can be data tables comprised in a single information system.

Data table of the user is a table comprising data relating to the user, such as his preferences, his personal data, etc. It also comprises user tastes relating to his permanent preferences: a specific literary genre, flower varieties, type of technology, transport preferences, such as using or not using toll motorways, etc.

Event table of the user is a table associated with a data table of the user.

Event table of at least one user's contact is a data table associated with a data table of a user's contact. A user's contact is an input in the data table of the user.

Event table of providers associated with a provider table is a data table associated with a provider data table. A provider is a physical or virtual entity offering products and/or services.

The searching and/or inferring means are an engine suitable for finding results verifying a series of search parameters, such as for example, third party user identifiers, or product and/or service identifiers in a data table through a communications network, for example the Internet.

A user application is an application used by the user. This application is connected with the searching and/or inferring means through the communications network. The user application can be run in a server, or in a computer, or in a mobile terminal, or in any other tablet type device, etc. User registration is an input in a remote user data table or it can be a data table local to the user application.

A third inventive aspect is a computer programme **characterised in that** it comprises programme coding means for performing the steps of a method according to the first inventive aspect when said programme runs on a computer.

A fourth inventive aspect is a support which can be read by a computer, **characterised in that** it contains a computer programme comprising programme coding means for performing the steps of a method according to the first inventive aspect when said programme runs on a computer.

All the features and/or the steps of the methods described in this specification (including the claims, description and drawings) can be combined in any combination, except the combinations of such features which are mutually excluding.

### Description of the Drawings

These and other features and advantages of the invention will be shown more clearly from the following detailed description of a preferred embodiment given only by way of illustrative and non-limiting example with reference to the attached drawings.
Figure 1 shows an example of a block diagram of a system according to the invention, in which the possible communications between its elements can be seen.
Figure 2 shows an example of a block diagram of a method according to the invention, in which the steps of a method according to the invention can be observed.
Figure 3 shows a different example of a block diagram of a method according to the invention, in which a product and/or service is selected with respect to an event of a user's contact.
Figure 4 shows a different example of a block diagram of a method according to the invention, in which an event of the event table of a provider is suggested to the user.
Figure 5 shows a different example of a block diagram of a method according to the invention, in which a notice with the recommended time to reach an event is sent to the user.
Figure 6 shows an example of a block diagram of a method according to the invention, in which a data table of the user or of a user's contact is accessed.

### Detailed Description of the Invention

### A system suitable for searching and/or inferring and/or sending information to a user

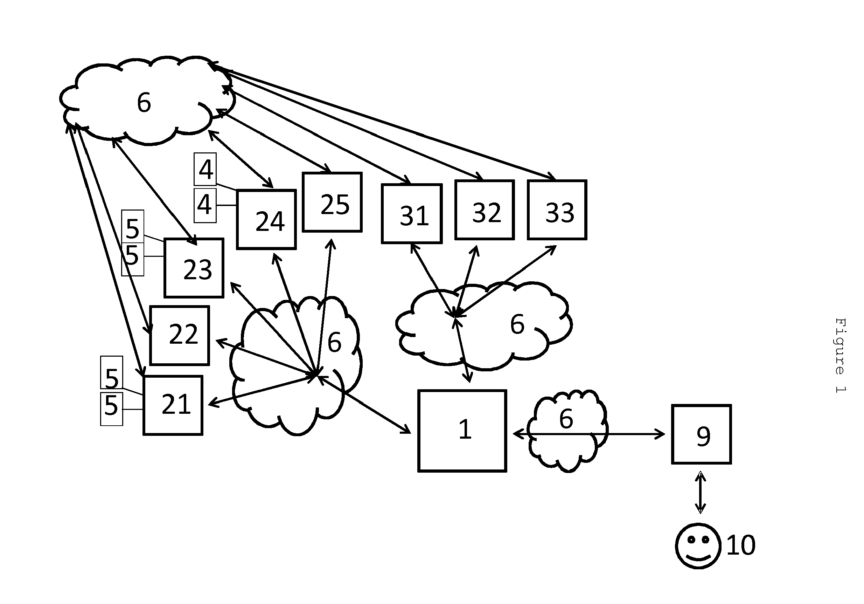

Figure 1 shows a block diagram of an example of a system according to the invention. The following elements can be observed therein:
- a user (10),
- a user application (9),
- searching and/or inferring means (1),
- a data table of the user (31),
- a contact table of the user (32) comprising data of the contacts, such as the names, preferences, etc,
- provider data tables (33),
- an event table of the user (21), event tables of user's contacts (22),
- provider event tables (23),
- products and/or services data tables (24),
- additional data tables (25) which can comprise, for example, data on the state of the roads, the traffic, weather information, etc,
- a communications network (6), interconnecting the user application (9) with the searching and/or inferring means (1) and with the different tables (21, 22, 23, 24, 25, 31, 32, 33)

In said system, these elements are related in the following manner: the user (10) starts a user application (9) which is in communication with searching and/or inferring means (1). These searching and/or inferring means (1) are in communication with the user application (9) itself and with a series of data tables (31, 32, 33, 21, 22, 23, 24, 25) by means of a communications network (6). The searching and/or inferring means (1) are capable of retrieving information from the data tables (31, 32, 33, 21, 22, 23, 24, 25) such that by using that information, it sends the user application (9) a series of notices with information or suggestions directly related to the interests of the user (10) or of one of his contacts in particularly timely times either for the user (10) or for any of his contacts.

In a particular embodiment, the enquiry (11) is performed periodically according to a determined periodicity, predefined by the user application (9). In another particular embodiment, the enquiry (11) is performed periodically according to a periodicity defined by the user (10). In both particular embodiments this periodicity can be modified by the user (10) at any time.

Some of the tables or of the information described can be contained in other tables.

In a particular embodiment of a system according to the invention, the searching and/or inferring means (1), the user application (9) and the data table of the user (31) are located under the same entity.

In a particular embodiment of a system according to the invention, the searching and/or inferring means (1) and the user application (9) are located under the same entity and the data table of the user (31) is located remotely and communicates with the preceding elements through a communications network (6).

In a particular embodiment of a system according to the invention, the searching and/or inferring means (1) and the data table of the user (31) are located under the same entity and the user application (9) is located remotely and communicates with the preceding elements through a communications network (6).

In a particular embodiment of a system according to the invention, the searching and/or inferring means (1), the data table of the user (31) and the user application (9) are located remotely and communicate with one another through a communications network (6).

In a particular embodiment of a system according to the invention, the system comprises a language interpretation module for detecting a series of languages and sending the messages and notices in said language.

In an embodiment of a system according to the invention, the user application (9) is used preferably by a user, although not in a limiting manner. The user application (9) can be used by a smartphone, robot, computer or the like. There are several possibilities in terms of the way of receiving notices on the existence of events. In different embodiments, the notices are presented in form of text messages, or messages encoded with Bidi codes, also known as quick response codes, or QR codes, or they can be an audio message, a message in augmented reality, etc.

In an embodiment of a system according to the invention, the user application (9) is an application for mobile devices or the like, it can be created for the World Wide Web and/or the Internet, for kiosks, for a smartphone, robot, a television set or any home automation display or any computing type device or device interpretable by computing, and under any platform. The user application (9) can also be incorporated in the computer on-board a vehicle. In one embodiment, this application is an integrated message reception and recognition application and in another embodiment, it is formed by a system receiving the information and another independent system processing it, for example for changing text to speech. Therefore, in different embodiments, this user application (9) receives the notice of an event (5) which can be a first action triggering a second action; or can be a written notice, for example a sentence or part of a written sentence or voice message, since the device in that embodiment has a text to speech engine. Furthermore, in another embodiment, the notice is received by means of NFC, Near Field Communication, a wireless technology between close objects, valid for example for identifying, exchanging or collecting data, similar to RFID, Radio Frequency Identification, cards. In different embodiments, the device has a barcode or bidirectional code or Bidi code receiver, and reading that code is sufficient for knowing the notice received. In an embodiment of a system according to the invention, the user application (9) comprises a facial recognition system. In an embodiment of a system according to the invention, the system comprises a language interpretation module for detecting a series of languages and sending the messages and notices in said language.

In an embodiment of a system according to the invention the notices can be sent from a user application (9) for mobile devices or the like, it can be created for the World Wide Web and/or the Internet, for a smartphone, robot, or any device and under any platform. Therefore, in different embodiments, the user application (9) collects the notice which can be a first action triggering a second action. Furthermore, in another embodiment, a notice is sent by means of NFC or Near Field Communication, a wireless technology between close objects, valid for example for exchanging or collecting data, such as RFID cards or bidirectional code or Bidi code, and reading that code is sufficient for the user to know the function to be performed.

### Method of searching and/or inferring and/or sending information to an application:

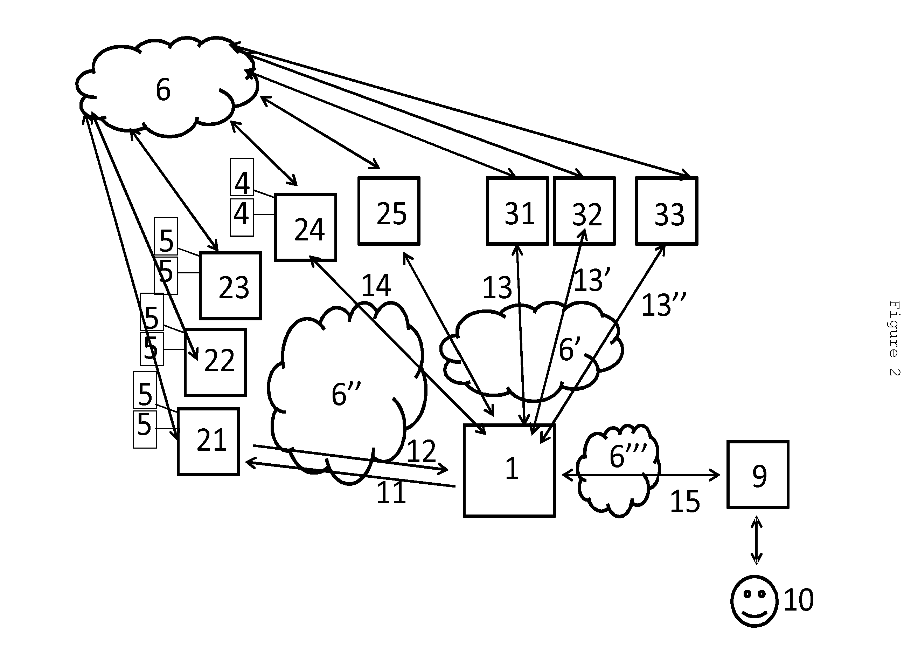

Figure 2 shows a particular embodiment of the method according to the invention. This embodiment comprising following steps where:
- the searching and/or inferring means (1) periodically enquire (11) the temporal proximity of at least one event (5) according to a temporal proximity criterion already predetermined or defined by a user (10) and according to a periodicity already predetermined or defined by the user (10) himself or receive (12) a notice of the temporal proximity of said at least one event (5) according to a temporal proximity criterion already predetermined or defined previously by the user (10) in at least one of the following data tables:
   ■ event table of the user (21),
   ■ event table of at least one user's contact (22), or
   ■ event table of providers (23) associated with a provider table (33),
- when the searching and/or inferring means (1) receive (12) a result from the enquiry or the notice of the temporal proximity of the at least one event (5):
   ■ the searching and/or inferring means (1) relate (14) said event (5) with at least one product and/or service (4) of a service and/or product data tables (24), accessing the corresponding data table to that end; i.e., if the event (5) is of the user, accessing (13) the data table of the user (31); if the event (5) is of a user's contact, accessing (13') the data table of that user's contact (32); if the event (5) is of a provider, accessing (13") the provider data table (33); the data tables of the user (31) and of the user's contact (32) comprise at least one of the following categories: user preferences, user subscriptions, user search history or similar categories,
   ■ if is possible, relate (14') the event (5) of the user event table (21) with an event of the data table of the provider (33), and
   ■ the searching and/or inferring means (1) send (15) a notice of said event (5) and a message related to the at least one product and/or service (4) to the application (9).

In a particular embodiment of the method according to the invention, the message related to the at least one product and/or service (4) comprises information of a commercial advertisement. This particular example provides the advantage for a provider where the provider can, proactively and without the user having requested for information, show its product and/or service (4) to the user (10) in the manner personalised according to the information contained in the data table of the user (31), or the information contained in the data tables of user's contacts (32), or the information contained in the provider data table (33), which information can be a publication in a social network, such as for example Twitter^{™}, which is considered relevant to the tastes of the user (10) and/or of a user's contact. This information can also originate from any information contained in the data table of the user (31), whether it is a preference or information relating to behaviour, for example, purchase history, subscriptions, enquiries in search engines, etc.

In a particular embodiment of the method according to the invention, the message related to the at least one product and/or service (4) comprises a business address. This particular example of a method according to the invention advantageously allows the user to directly access an e-commerce web page where the product and/or service (4) can be found, in the case that the business address is a URL address, Uniform Resource Locator.

In a particular embodiment of the method according to the invention, the message related to the at least one product and/or service (4) comprises a purchase and/or acquisition order. In this embodiment of the method, the user (10) advantageously receives a message suggesting a product and/or service (4) and a purchase and/or acquisition order which preferably is a hyperlink to an e-commerce web page for immediately purchasing and/or acquiring the product and/or service (4) if the user (10) uses the hyperlink. In this particular example, the data table of the user (31) comprises information relating to the credit or debit cards and bank accounts for paying for the product and/or service (4).

In a particular embodiment of the method according to the invention, upon verifying the existence of the event (5), the time necessary to reach the place of the event (5) from the location of the user (10) using means of transport selected according to the information contained in the data table of the user (31) is calculated, taking into account information of the traffic and/or public transport situation at that time, such that the notice of the existence of the event comprises the estimated departure time of the start of the journey to reach the event (5) at the scheduled time of the start of said event (5) depending on said information of the traffic and/or public transport situation. This information necessary for calculating the travelling time is retrieved from additional data tables (25) with information relating to, for example: maps, routes, weather conditions, traffic situation, or the like.

In a particular embodiment of the method according to the invention, said method can be carried out by changing the following elements:
- the role of the user (10) is performed by a user's contact who has a table of his events, a table of his data and a table of his contacts associated
- the event table of the user's contact is enquired instead of the event table of the user (21)
- the event table of the user's contact's contacts is enquired instead of the event table of the user's contacts (22)
- the data table of the user's contact is enquired instead of the data table of the user (31)
- the contact table of the user's contacts is enquired instead of the contact table of the user (32)

### Particular embodiments of the method according to the invention

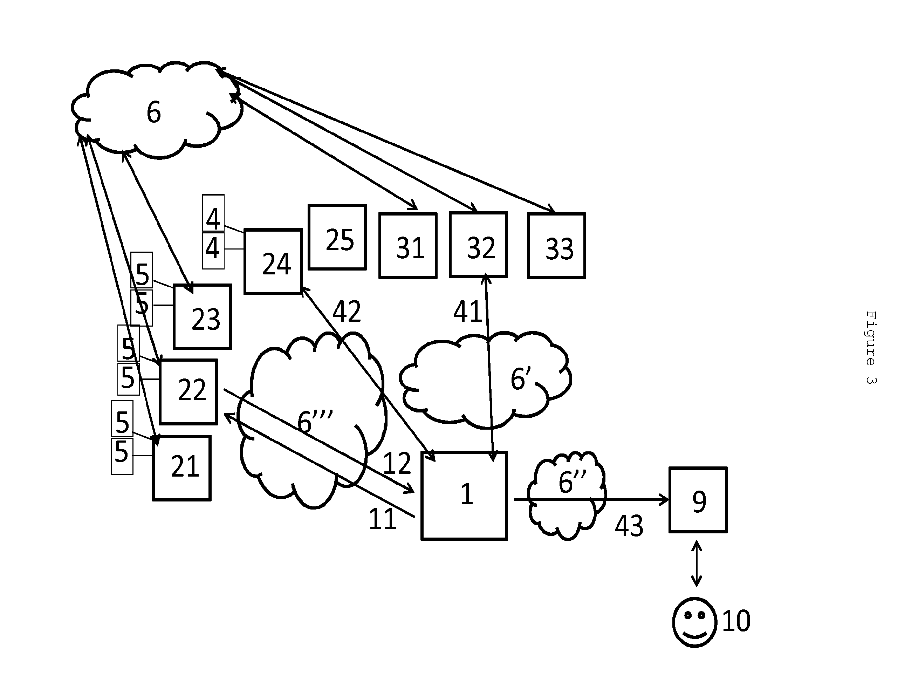

Figure 3 shows a particular embodiment of the method according to the invention, wherein:
41.the temporal proximity of a birthday event (5) of a user's contact, for example, the birthday of the user's mother is verified,
42.a product and/or service (4) is chosen from the service and/or product data tables (24) by inference, taking into account the information contained in the data table of user's contact (32), for example, in the data table of the user's mother comprising the mother's preference for wild flowers. Information such as the tastes or preferences of the contact, the last Internet searches conducted by said contact, or similar features can be retrieved from said data table of the user's contact (32).
43.the searching and/or inferring means (1) send a notice of the product and/or service (4) to the application (9) in a message, the product and/or service (4), or the wild flowers, which can be acquired as a gift. The message can contain a purchase order of the product and/or service (4) selected by means of a link to the web page, or it can be connected to a web service, an API or the like from which part or the complete transaction can be performed between the user and a provider of said product and/or service (4).

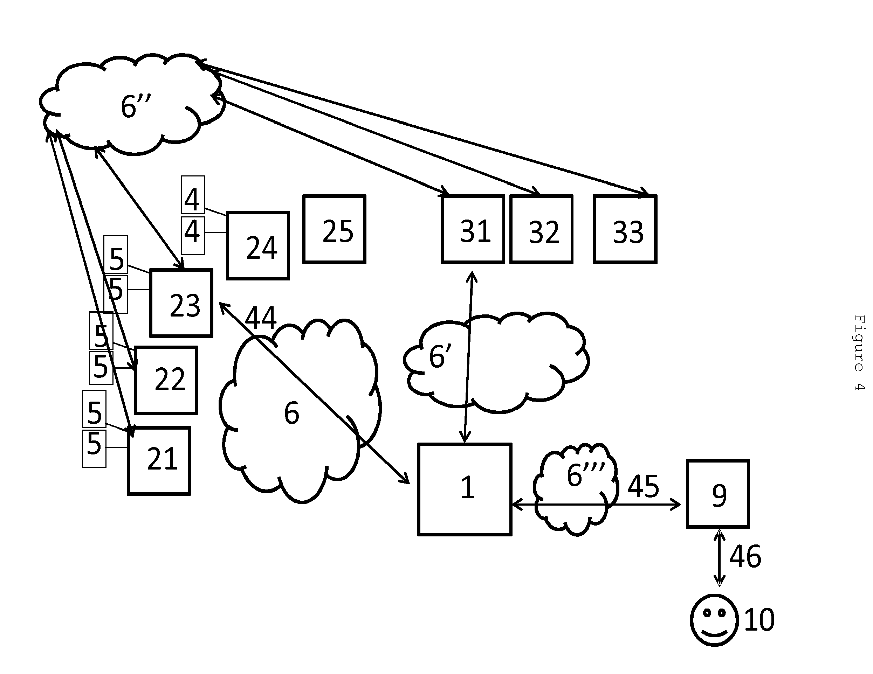

Figure 4 shows a particular embodiment of the method according to the invention, wherein:
44.the temporal proximity of an event (5) contained in an event table of a provider (23) is verified, if a product and/or service (4) associated with an event (5) of said provider is related by inference to the data contained in the data table of the user (31),
45. the searching and/or inferring means (1) send a message to the user application (9) notifying the existence of the event (5) together with a suggestion for accepting said event (5),
46.the user (10) accepts the suggestion, wherein that acceptance can consist of an option for reserving or purchasing the product and/or service (4), or of creating an appointment in the calendar of the user (10).

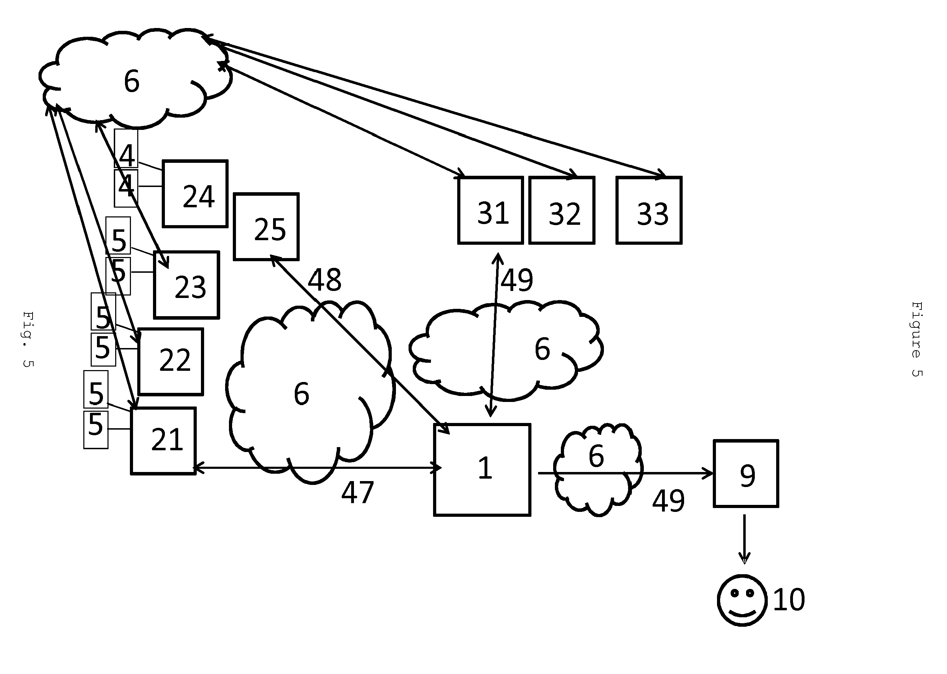

Figure 5 shows a particular embodiment of the method according to the invention, wherein:
47.the temporal proximity of an event (5) whether it is contained in the event table of the user (21), or in an event table of a user's contact (22) or in an event table of a provider (23), for example the user's dentist appointment, is verified,
48.the searching and/or inferring means (1) proactively enquire the traffic situation and transport alternatives which are available to the user to reach the location of the event (5) from the location of the user (10), for example, the dentist's office. The information necessary for calculating the travelling time is retrieved from additional data tables (25) with information relating to, for example: maps, routes, weather conditions, traffic situation, or the like.
49.the searching and/or inferring means (1) notify the user in a message on the recommended time for starting the journey to reach the event (5) on time in the event that there is an incident in any of these transport alternatives. In this case the product and/or service offered can be a route notification service which can also comprise an option of sending a message to a recipient, or to the dentist, for example "I will be late for my appointment due to traffic", or the service can also comprise a choice between going by toll motorways or toll-free roads, or it can comprise an option of charging the user account the cost of the toll, comprised in the data table of the user (31).

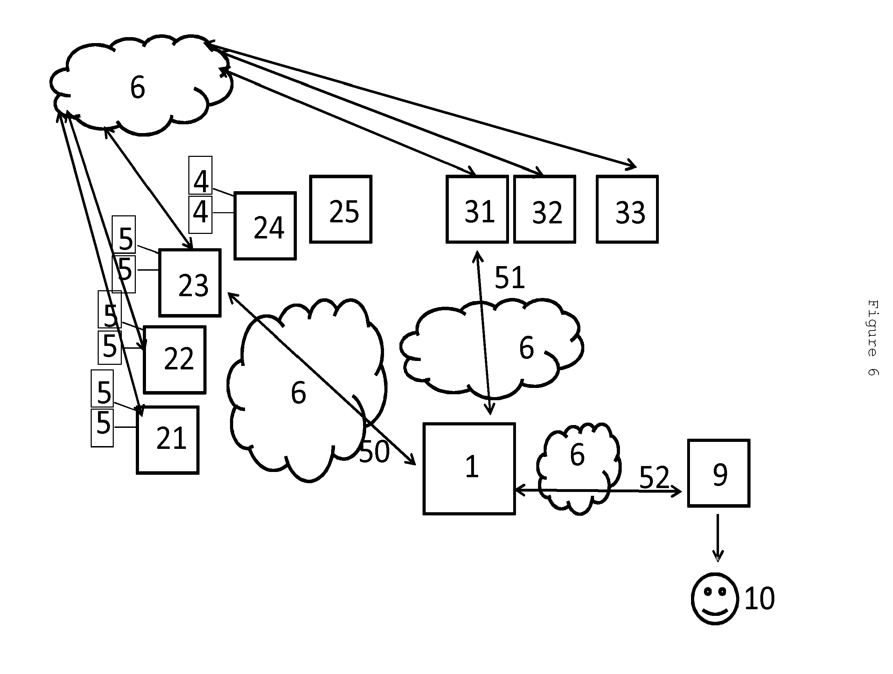

Figure 6 shows a particular embodiment of the method according to the invention, wherein:
50.the temporal proximity of an event (5) contained in the provider event table (23), for example, the market launch of a new smartphone, is verified
51.the data table of the user (31) comprising following categories is assessed: user preferences, user subscriptions, user search history and where publications in a social network regarding the positive opinion of the user with respect to this smartphone are found,
52.the searching and/or inferring means (1) send the user (10) a message comprising information about the event (5) of the provider which has been related to the preference for the smartphone contained in the data table of the user (31). The message can comprise a purchase order directed to the e-commerce page of the provider.

## Claims

1. A proactive method of searching, and/or inferring and/or sending information to an application (9) by searching and/or inferring means (1), **characterised in that** it comprises at least the steps where:
a.- the searching and/or inferring means (1) periodically enquire (11) the temporal proximity of at least one event (5) under a temporal proximity criterion already predetermined or defined by a user (10) and according to a periodicity already predetermined or defined by the user (10) himself or the searching and/or inferring means (1) receive (12) a notice of the temporal proximity of said at least one event (5) according to a temporal proximity criterion already predetermined or defined by the user (10) in at least one of the following data tables:
■ event table of the user (21),
■ event table of at least one user's contact (22),
■ event table of providers (23) associated with a provider table (33)
when the searching and/or inferring means (1) receive (12) a result from the enquiry or the notice of the temporal proximity of the at least one event (5):
b.- the searching and/or inferring means (1) relate (14) said event (5) with at least one product and/or service (4) of a service and/or product data table (24), and
c.- the searching and/or inferring means (1) send (15) a notice of said event (5) and a message related to the at least one product and/or service (4) to the application (9).

2. The proactive method of searching and/or inferring and/or sending information according to claim 1, comprising, before step b.- or c, the step where the searching and/or inferring means (1) access (13) at least one of the following data tables:
■ data table of the user (31) comprising at least one of the following categories: user preferences, user subscriptions, user search history or similar categories, or
■ data table of at least one user's contact (32) comprising at least one of the following categories: user's contact preferences, user's contact subscriptions, user's contact search history or similar categories, or
■ data table of a provider (33)

3. The proactive method of searching and/or inferring and/or sending information according to any of claims 1 to 2, comprising, before step b.- or c., the step where the searching and/or inferring means (1) relate (14') the event (5) of the user event table (21) with an event of the data table of the provider (33).

4. The proactive method of searching and/or inferring and/or sending information according to any of the preceding claims, wherein the message related to the at least one product and/or service (4) comprises information of a commercial advertisement.

5. The proactive method of searching and/or inferring and/or sending information according to any of the preceding claims, wherein the message related to the at least one product and/or service (4) is a text message, a message encoded with Bidi codes, an audio message, a message in augmented reality or the like.

6. The proactive method of searching and/or inferring and/or sending information according to any of the preceding claims, wherein the message related to the at least one product and/or service (4) comprises a business address, preferably a URL address.

7. The proactive method of searching and/or inferring and/or sending information according to any of the preceding claims, wherein the message related to the at least one product and/or service (4) comprises an option for purchasing or acquiring and/or receiving information about the product and/or service (4) through the user application (9), for example through a web service, an API or the like.

8. The proactive method of searching and/or inferring and/or sending information according to any of the preceding claims, wherein the message related to the at least one product and/or service (4) comprises an option for purchasing or acquiring and/or receiving information about the product and/or service through NFC, a QR code or the like.

9. The proactive method of searching and/or inferring and/or sending information according to any of the preceding claims, wherein the message related to the at least one product and/or service (4) comprises a purchase and/or acquisition order.

10. The proactive method of searching and/or inferring and/or sending information according to any of the preceding claims, wherein after verifying the existence of the event (5), the following step is performed:
- the searching and/or inferring means (1) calculate the time necessary to reach the place of the event (5) from the location of the user (10) taking into account information of the traffic and/or public transport situation at that time, such that the notice of the existence of the event (5) or the message related to the at least one product and/or service (4) comprises the estimated departure time of the start of the journey to reach the location of the event (5) at the scheduled time of said event (5) depending on said information of the traffic and/or public transport.

11. The proactive method of searching and/or inferring and/or sending information according to any of the preceding claims, **characterised in that**,
- the role of the user (10) is performed by a user's contact who has a table of his events, a table of his data and a table of his contacts associated.
- the event table of the user's contact is enquired instead of the event table of the user (21)
- the data table of the user's contact is enquired instead of the data table of the user (31)
- the event table of the user's contact's contacts is enquired instead of the event table of the user's contacts (22)
- the contact table of the user's contacts is enquired instead of the contact table of the user (32)

12. A proactive system for searching and/or inferring
and/or sending information to an application (9), the system comprising:
- a data table of a user (31) comprising data about a user (10),
- a contact table of the user (32),
- a service and/or product data table (24) comprising data about products and/or services (4),
- searching and/or inferring means (1),
- a user application (9),
the system also comprising at least one of the following tables:
- an event table of the user (21), or
- at least one event table of at least one user's contact (22), or
- a provider event table (23) comprising data about the providers (3),
wherein the searching and/or inferring means (1) are in communication with the different data tables (21, 22, 23, 24, 31, 32, 33) and with the user application (9),
wherein the system is suitable for carrying out the steps of a method according to any of the preceding claims.

13. The system according to claim 12, wherein the searching and/or inferring means (1), the user application (9) and the data table of the user (31) are located under the same entity.

14. The system according to claim 12, wherein the searching and/or inferring means (1) and the user application (9) are located under the same entity and the data table of the user (31) is located remotely and is in communication with the preceding elements through a communications network (6).

15. The system according to claim 12, wherein the searching and/or inferring means (1) and the data table of the user (31) are located under the same entity and the user application (9) is located remotely and is in communication with the preceding elements through a communications network (6).

16. The system according to claim 12, wherein the searching and/or inferring means (1), the data table of the user (31) and the user application (9) are located remotely and are communicated with one another through a communications network (6).

17. The system according to any of claims 12 to 16, wherein the notices and the messages are suitable for the World Wide Web and/or Internet, for kiosks, a smartphone, robot, television set or any home automation display or any computing type device or device interpretable by computing, and under any platform.

18. A computer programme, **characterised in that** it comprises programme coding means for performing the steps of a method according to any of claims 1 to 11 when said programme runs on a computer.

19. A support which can be read by a computer, **characterised in that** it contains a computer programme comprising programme coding means for performing the steps of a method according to any of claims 1 to 11 when said programme runs on a computer.
